# EUROPÄISCHE PATENTSCHRIFT

(11) **EP 2 792 125 B1**
(45) Veröffentlichungstag und Bekanntmachung des Hinweises auf die Patenterteilung: **25.04.2018**
(21) Anmeldenummer: 12813310.5
(22) Anmeldetag: 17.12.2012
(51) Int. Cl.: H04L 12/24, H04L 29/08, H04L 12/26

(54) **BEWERTUNG EINER NUTZUNG EINER VON EINEM WEB-SERVICE BEREITGESTELLTEN ODER AUFGERUFENEN LEISTUNG UND/ODER FUNKTION**
ASSESSMENT OF A UTILIZATION OF A SERVICE AND/OR FUNCTION PROVIDED BY OR REQUESTED BY A WEB SERVICE
ÉVALUATION D' UNE UTILISATION D'UN SERVICE OU D'UNE FONCTION FOURNIE OU REQUISE PAR UN SERVICE WEB

(30) Priorität: 16.12.2011 DE 102011056524
(43) Veröffentlichungstag der Anmeldung: 22.10.2014
(73) Patentinhaber: SCHNEIDER ELECTRIC AUTOMATION GMBH, 97828 Marktheidenfeld (DE)
(72) Erfinder: NEUBERT, Ralf, 63739 Aschaffenburg (DE); ZINN, Marcus, 63110 Rodgau (DE)
(74) Vertreter: Stoffregen, Hans-Herbert
(86) Internationale Anmeldenummer: PCT/EP2012/075853
(87) Internationale Veröffentlichungsnummer: WO 2013/087940

(56) Entgegenhaltungen:
- WO-A1-2009/047201
- US-A1- 2004 064 557
- US-A1- 2007 061 018
- Stefan Süpke: "Abrechnung von Web Service Diensten", , 1. Oktober 2003 (2003-10-01), XP55057105, Gefunden im Internet: URL:http://eris.prakinf.tu-ilmenau.de/edu/ HS/SS2003/Suepke03Abrechnung.pdf [gefunden am 2013-03-19]
- WENLI DONG ET AL: "QoS-Aware Web Service Composition Based on SLA", NATURAL COMPUTATION, 2008. ICNC '08. FOURTH INTERNATIONAL CONFERENCE ON, IEEE, PISCATAWAY, NJ, USA, 18 October 2008 (2008-10-18), pages 247-251, XP031358716, ISBN: 978-0-7695-3304-9

## Beschreibung

Die Erfindung bezieht sich auf ein Verfahren zur Bewertung einer Nutzung einer von einem Web-Service bereitgestellten oder aufgerufenen Leistung und/oder Funktion nach dem Oberbegriff des Anspruchs 1 sowie auf eine Automatisierungskomponente nach dem Oberbegriff des Anspruchs 18.

Ein Verfahren und ein Automatisierungsgerät der bekannten Art ist in der US 2004/0064557 A1 beschrieben. Die US 2004/0064557 A1 betrifft die zwangsweise Ausführung von Service-Level-Agreements für Services, die über ein Client-Server-Netzwerk bereitgestellt werden. Die SLAs werden automatisch ausgeführt. Dies wird durch automatisches Zählen von Service-Anfragen und Zuweisung von Resourcen des Servers basierend auf SLAs, den aktuell verfügbaren Resourcen und den Bedürfnissen des Anwenders erreicht.

Die US 7 305 431 B2 bezieht sich auf ein Verfahren zur Ermöglichung einer automatischen Geltendmachung von Serie-Level-Agreements in einem Client-Server-Netzwerk. Dabei werden Aufrufe von Services und die Bereitstellung von Ressourcen eines Servers, auf dem die Services gehostet sind, auf der Grundlage der Services-Level-Agreements, der aktuell verfügbaren Ressourcen und der Bedürfnisse des Anwenders gemessen. Bei diesem Verfahren werden die Web-Services auf einem einzigen Server gehostet, wobei die Services von einer Vielzahl von Clients über ein Netzwerk aufgerufen werden. Die Service-Level-Agreements sind in einer Datenbank des Servers gespeichert.

In einem Artikel von Agarwal, V. u. a.: "Architectural Issues of Metering and Accounting of Grid Services" IBM Research Report, RI020101, IBM India Research Lab., New Dehli, 2002, werden mehrere Architekturen zur Erfassung und Abrechnung der Benutzung von Grid-Ressourcen beschrieben. Es wird eine Monitoring-Komponente vorgeschlagen, welche Daten im Zusammenhang mit der Benutzung der Services erfasst. Die Monitoring-Funktion kann entweder in jedem Service oder durch Verwendung eines externen Monitoring-Agenten realisiert werden.

Des Weiteren ist eine Mess-Komponente vorgesehen, welche die Überwachungsinformationen der aktuellen aktiven Benutzeranfragen sammelt und diese in eine oder mehrere Abrechnungsmetriken umwandelt.

Gemäß eines ersten Modells ist ein externer, zentraler Mess-Service vorgesehen. Jeder Grid-Service meldet sich bei dem Mess-Service an. Für jeden Request sendet der Grid-Service einen Initiierungs-Request an den Mess-Service.

In einem zweiten Modell ist die Sammlung von Überwachungsinformationen, die Bewertung und Mitteilung von Abrechnungswerten in dem Grid-Serivce enthalten. Dabei kann die Bewertungskomponente entweder als Teil des Grid-Services oder als separate Komponente implementiert sein. Die Abrechnungsinformation wird von dem Service zu dessen Benutzer übertragen. Jeder Service-Aufruf enthält messspezifische Informationen wie Request-ID, maximal erlaubte Benutzungsgrenzen usw..

In einem dritten Modell wird vorgeschlagen, dass jeder Grid-Service eine exklusive Mess-Komponente mit einem eigenen Interface aufweist. Der Service-Aufruf und der Ablauf von Mess-Informationen erfolgt über separate Wege.

Bei den aus dem Stand der Technik bekannten Modellen sind die Grid-Services in einem oder mehreren Servern gehostet, die einen Benutzer als Client über ein Netzwerk aufrufen kann. Bewertungsspezifische Daten sind dabei ebenfalls zentral in einer Datenbank eines Servers gespeichert.

Die Abrechnung von Web-Service-Diensten ist in einer Druckschrift von Stefan Süpke: "Abrechnung von Web-Service-Diensten", Technische Universität Lindenau, Sommersemester 2003 beschrieben. Bei dem bekannten Verfahren registriert ein Anbieter einen Web-Service in einem öffentlichen oder privaten Register, wie etwa ein UDDI-Verzeichnis, mit der dazugehörigen Beschreibung in WSDL (Web Service Description Language). Ein Nachfrager kann das Register nach einem von ihm gesuchten Dienst durchsuchen und sich die WSDL-Beschreibung herunterladen und diese nach vereinbarten Regeln in seine Applikation einbinden. Dabei müssen die Regeln, die zum Einbinden erforderlich sind, schon im Register ersichtlich sein. Das Einbinden des Web-Service kann manuell oder automatisch erfolgen. Das Verfahren fordert von den einzelnen Komponenten jedoch eine erhebliche Rechenleistung.
Daher ist das beschriebene Verfahren für die Bewertung einer Nutzung der von einer Automatisierungskomponente bereitgestellten Leistung und/oder Funktion ungeeignet, wenn die Automatisierungskomponente nur eine geringe Rechenleistung aufweist.
Die US 2007/0061018 betrifft eine Netzwerkkommunikation in einem industriellen Netzwerk. Ein Automatisierungsgerät weist eine Empfangseinheit auf, die eine Anfrage nach in dem Automatisierungsgerät gespeicherten Daten empfängt.
Die WO 2009/047201 A1 betrifft ein Automatisierungsgerät mit einem Ausführungsmechanismus für Steuerprogramme sowie einem Web-Service-Stack zur Kommunikation mit anderen Automatisierungsgeräten und/oder Automatisierungssoftware.
Der Artikel von Wenli Dong u.a. "QoS-aware Web Service Composition Based on SLA" bezieht sich auf service-orientierte Architekturen, wobei funktional äquivalente Web Services mit unterschiedlicher Qualität ausgewühlt und basierend aus Service-Level-Agreements (SLA) zusammengesetzt werden, um einen dynamischen Task ausführen zu können.

Davon ausgehend liegt der vorliegenden Erfindung die Aufgabe zugrunde, ein Verfahren und eine Automatisierungskomponente der eingangs genannten Art derart weiterzubilden, dass auch bei geringer Hardware-Ressource der Automatisierungskomponente eine lokale Bewertung einer Nutzung der von dieser bereitgestellten Leistung und/oder Funktion möglich ist.

Die Aufgabe wird erfindungsgemäß u. a. durch die Merkmale des Anspruchs 1 gelöst.

In einer bevorzugten Ausführungsform ist vorgesehen, dass der Web-Service-Aufruf durch ein dem Web-Service vorgelagertes Web-Service-Proxy-Modul erkannt und ausgelesen wird.

Dabei wird das Web-Service-Proxy-Modul durch eine gerätespezifische Kommunikationsschnittstelle aktiviert, sobald der Web-Service-Aufruf erfolgt.

Es ist vorgesehen, dass das Web-Service-Proxy-Modul die in dem Web-Service-Aufruf enthaltene Leistungs- und/oder Funktions-Information ausliest, aufbereitet und anschließend den entsprechenden Web-Service startet.

Um den Web-Service-Aufruf zu beantworten ist vorgesehen, dass der Web-Service nach Ausführung des Funktionsaufrufs ein Ergebnis an das Web-Service-Proxy-Modul zurücksendet und dass das Web-Service-Proxy-Modul den Web-Service-Aufruf beantwortet.

Gemäß einer alternativen Ausführungsform des Verfahrens ist vorgesehen, dass der Web-Service-Aufruf durch ein in einer Kommunikationsschnittstelle integriertes und dem Web-Service vorgelagertes hardware-basiertes Erkennungsmodul erkannt wird und dass die in dem Web-Service-Aufruf enthaltene Leistungs- und/oder Funktions-Information durch Messen von über die Kommunikationsschnittstelle übertragenen physikalischen Signalen ausgelesen wird.

Dabei wird für den Web-Service-Aufruf ein Web-Service-Protokoll verwendet, welches die Leistungs- und/oder Funktions-Information in einem Transportprotokoll und/oder einem Nachrichtenprotokoll und/oder aufgeteilt auf beide Protokollarten des Web-Service-Protokolls enthält.

Eine weitere alternative Ausführungsform des Verfahrens zeichnet sich dadurch aus, dass der Web-Service-Aufruf durch ein in dem Web-Service integriertes Erkennungsmodul erkannt und ausgelesen wird und dass die ausgelesenen Informationen an ein in dem Web-Service integriertes oder an ein dem Web-Service eindeutig zugeordnetes Erfassungsmodul übertragen werden.

Auch besteht die Möglichkeit, dass die Erkennung des Web-Service-Aufrufs indirekt durch Erkennung eines von dem Web-Service an das Prozessausfiihrungsmodul gerichteten Funktionsaufruf in der Automatisierungskomponente erfolgt und dass die durch den Funktionsaufruf ausgeführten Aktionen durch das Erfassungsmodul erfasst werden.

Bei der bevorzugten Ausführungsform erfolgt die Erkennung und Erfassung mittels eines dem Web-Service nachgelagerten Web-Service-Proxy-Moduls, wobei ein Nachrichtenfluss von dem Web-Service zu dem Prozessausführungsmodul durch das Web-Service-Proxy-Modul vor der Weiterleitung der Nachricht unterbrochen wird und dass die Nachricht gegebenenfalls durch das Web-Service-Proxy-Modul verändert wird.

Eine Automatisierungskomponente gemäß der Erfindung zeichnet sich u. a. durch die Merkmale des Anspruchs 18 aus.

In bevorzugter Ausführungsform kann das Bewertungsmodul als zumindest ein dem Web-Service vorgelagertes Web-Service-Proxy-Modul ausgebildet sein. Das Bewertungsmodul umfasst ein Erkennungsmodul, das als eine Software-Komponente in einem Kommunikations-Stack des Web-Service-Proxy-Moduls implementiert sein kann.

Zur Speicherung von konfigurierbaren Benutzungsparametern kann die Automatisierungskomponente ein Speichermodul aufweisen. Auch besteht die Möglichkeit, die Benutzungsparameter extern zu speichern.

Gemäß einer weiteren Ausführungsform kann das Erkennungsmodul als ein in einer Kommunikationsschnittstelle der Automatisierungskomponente integrierter Hardware-/Software-Baustein ausgebildet sein, mittels dem über die Kommunikationsschnittstelle übertragene Signale messbar sind.

Eine weitere bevorzugte Ausfuhrungsform zeichnet sich dadurch aus, dass das Erkennungsmodul in dem Web-Service integriert ist und dass das Erfassungsmodul entweder in den Web-Service integriert oder dem Web-Service extern als Bestandteil der Automatisierungskomponente eindeutig zugeordnet ist.

Eine weitere alternative Ausführungsform zeichnet sich dadurch aus, dass das Erfassungsmodul sowie das Erkennungsmodul dem Web-Service nachgelagert sind und dass Funktionsaufrufe des Web-Services überwacht werden. Dabei sind das Erkennungsmodul und das Erfassungsmodul als Hardware-/Software-Modul ausgebildet. Auch besteht die Möglichkeit, dass das Erkennungsmodul und/oder das Erfassungsmodul in einem dem Web-Service nachgelagerten Web-Service-Proxy-Modul integriert ist.

Im Zusammenspiel von Web-Service-basierten Leistungen und/oder Funktionen mit Automatisierungs- und Messgeräten, die über z. B. ein Gateway oder direkt in ein Netzwerk eingebunden werden und direkt oder indirekt Informationen via Web-Service austauschen, wird durch die Erfindung ein regelbasiertes Verfahren für eine dezidierte Erkennung und Erfassung einer Dienstleistung und/oder einer Funktion, die direkt mit der Benutzung bzw. des Aufrufens des Web-Services, der von solchen Automatisierungs- oder Messgeräten bereitgestellt wird, zur Verfügung gestellt.

Insbesondere für die Benutzung eines oder mehrerer Web-Services für Datenaustausch, Diagnose bzw. Fernwartung, z. B. in cloud-basierten Systemen oder innerhalb eines Automatisierungssystems, wird eine regelbasierte und für das jeweilige Gerät eindeutig identifizierbare Erkennung und Erfassung von darin integrierten Diensten und/oder Funktionen ermöglicht.

Die Dienste und/oder Funktionen können über festgelegte Parameter, z. B. Service-Level-Agreements, konfiguriert und kontrolliert werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines bevorzugten Ausfiihrungsbeispiels.

Es zeigen:
- Fig. 1: eine schematische Darstellung eines Automatisierungssystems mit Automatisierungskomponenten, deren Funktionen über Web-Services aufrufbar sind,
- Fig. 2: eine schematische Darstellung einer Automatisierungskomponente mit einer ersten Ausführungsform einer vorgelagerten Erkennung von Web-Service-Aufrufen,
- Fig. 3a) - 3d): schematische Darstellungen von Automatisierungskomponenten mit weiteren Ausführungsformen einer vorgelagerten Erkennung von Web-Service-Aufrufen,
- Fig. 4: eine schematische Darstellung einer Automatisierungskomponente mit einer vorgelagerten hardware-basierten Erkennung von Web-Service-Aufrufen,
- Fig. 5: ein schematischer Ablauf eines Verfahrens zur vorgelagerten Erkennung von Web-Service-Aufrufen,
- Fig. 6: eine schematische Darstellung einer Automatisierungskomponente mit einer ersten Ausführungsform einer web-service-integrierten Erkennung und Erfassung von Web-Service-Aufrufen,
- Fig. 7: eine schematische Darstellung einer Automatisierungskomponente mit einer zweiten Ausführungsform einer integrierten Erkennung und Erfassung von Web-Service-Aufrufen,
- Fig. 8: eine schematische Darstellung eines Verfahrens zur web-service-integrierten Erkennung und Erfassung eines Web-Service-Aufrufs,
- Fig. 9: eine schematische Darstellung einer Automatisierungskomponente mit einer ersten Ausführungsform einer nachgelagerten Erkennung und Erfassung von Web-Service-Aufrufen,
- Fig. 10: eine schematische Darstellung einer Automatisierungskomponente mit einer zweiten Ausführungsform einer nachgelagerten Erkennung und Erfassung von Web-Service-Aufrufen,
- Fig. 11: eine schematische Darstellung einer Automatisierungskomponente mit einer dritten Ausführungsform einer nachgelagerten Erkennung und Erfassung von Web-Service-Aufrufen,
- Fig. 12: eine schematische Darstellung eines Verfahrens zur nachgelagerten Web-Service-basierten Erkennung und Erfassung eines Web-Service-Aufrufs und
- Fig. 13a)-13c): Ausführungsformen von Bewertungsmodulen

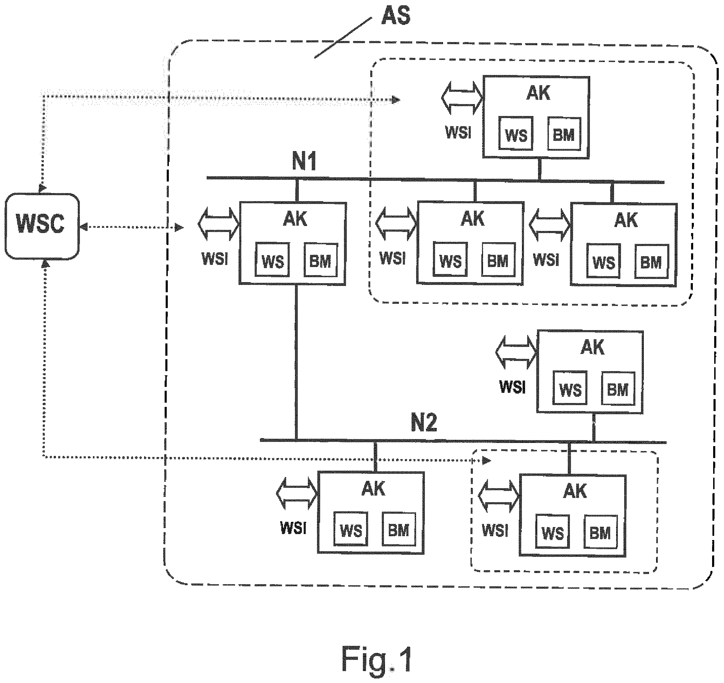

Fig. 1 zeigt eine schematische Darstellung eines Automatisierungssystems AS mit service-orientierten Automatisierungskomponenten AK in Form von z. B. Steuergeräten, Messgeräten, Eingabe- und/oder Datenerfassungseinheiten, die über ein Netzwerk N1, N2 Nachrichten in Form von Web-Service-Aufrufen WSA austauschen.

Die Automatisierungskomponenten AK weisen jeweils zumindest eine integrierte Web-Service-Schnittstelle WSI auf, über die in den jeweiligen Automatisierungskomponenten AK implementierte Web-Services WS z. B. durch einen Web-Service-Client WSC aufrufbar sind.

Die Automatisierungskomponenten AK bieten jeweils Dienstleistungen D und/oder Funktionen F an, die über den Web-Service-Aufruf WSA aufgerufen und Prozessausführungsmodule PAM ausgeführt werden können. Zur Erkennung, Erfassung und schließlich Abrechnung der Dienstleistungen D und/oder Funktionen F, die direkt mit der Benutzung und/oder dem Aufruf des zugehörigen Web-Services WS verbunden sind, ist in der Automatisierungskomponente AK ein Bewertungsmodul BM implementiert.

Nachfolgend werden regelbasierte Verfahren und Ausführungsformen von Bewertungsmodulen BM1 - BM11 für eine dezidierte Erkennung und Erfassung der Dienstleistungen D und/oder Funktionen F beschrieben.

Dem Verfahren liegt die Idee zugrunde, den Aufruf eines Web-Services WS1 - WS11 direkt oder indirekt zu erkennen und die mit der Benutzung bzw. dem Aufruf einer der mit den Web-Services WS1 - WS11 verbundenen Dienstleistungen D und/oder Funktionen F auf der Grundlage von definierten Parametern P zu erfassen.

Zum Zwecke der Erfassung der durch einen der Web-Services WS1 - WS11 repräsentierten und gekapselten spezifischen Dienstleistungen D bzw. Funktionen F sind verschiedene Parameter P definiert, wie beispielsweise die Art der Dienstleistung, Verfügbarkeit oder Benutzungsdauer. Diese können in Form von Service-Level-Agreements (SLA) definiert sein, die z. B. gerätetypisch lokal in einem Speichermodul SM gespeichert werden.

Gemäß einer ersten Ausführungsform erfolgt die Erkennung und Erfassung des Web-Service-Aufrufs WSA noch bevor dieser zu dem eigentlichen Web-Service WS gelangt. Dies wird nachfolgend als vorgelagerte Erkennung bezeichnet. Dazu ist das Bewertungsmodel BM derart implementiert, dass dieses dem Web-Service WS vorgelagert ist.

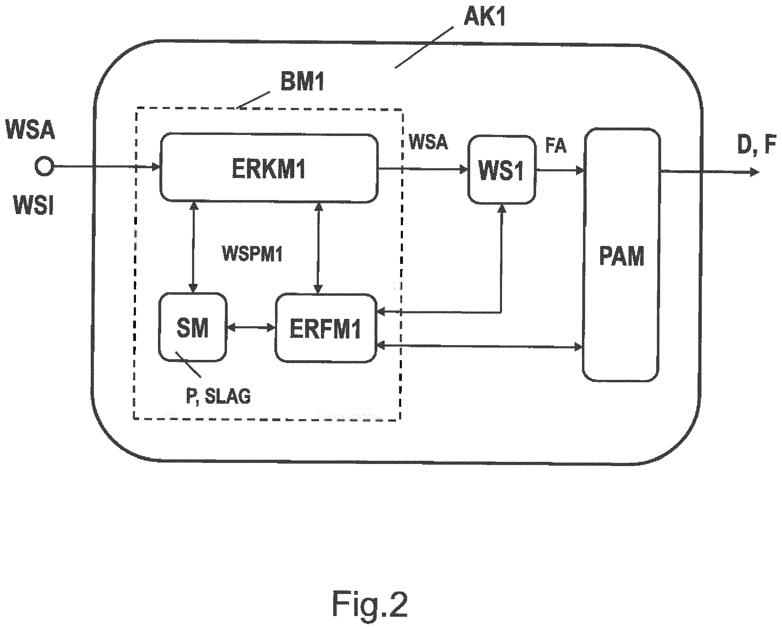

Eine entsprechende Automatisierungskomponente AK1 ist in Fig. 2 schematisch dargestellt.

Das dem Web-Service WS1 vorgelagerte Bewertungsmodul BM1 umfasst ein Erkennungsmodul ERKM1 mit der Web-Service-Schnittstelle WSI1 zum Empfang des Web-Service-Aufrufes WSA. Das Erkennungsmodul ERKM1 hat Zugriff auf das Speichermodul SM, in dem verschiedene Parameter P, z. B. in Form von Service-Level-Agreements, gespeichert sind. Die Parameter sind konfigurierbar. Ferner ist ein Erfassungsmodul ERFM1 vorgesehen, welches kommunikativ mit dem Erkennungsmodul ERKM1 verbunden ist und ebenfalls Zugriff auf die in dem Speichermodul SM gespeicherten Parameter P hat.

Das Erkennungsmodul ERKM1 ist ausgangsseitig mit einer Schnittstelle des Web-Services WS1 verbunden, um den Web-Service-Aufruf WSA an den Web-Service WS1 weiterzuleiten. Der Web-Service WS1 ruft über einen Funktionsaufruf FA das Prozessausführungsmodul PAM zur Ausführung der Funktion F und/oder Dienstleistung D auf.

Die Bewertung der durch die Automatisierungskomponente AK1 aufgrund des Web-Service-Aufrufs WSA bereitgestellte Dienstleistung D oder Funktion F kann auf der Grundlage des durch das Erkennungsmodul ERKM1 erkannten Web-Service-Aufrufs WSA in Verbindung mit den Parametern P erfolgen. Alternativ besteht die Möglichkeit, nach Erkennung eines Web-Service-Aufrufs WSA mittels des Erfassungsmoduls ERFM1 die Dienstleistung D, die direkt mit der Benutzung des Web-Service WS1 verknüpft ist, zu erfassen und unter Berücksichtigung der Parameter P sodann eine Bewertung der erbrachten Dienstleistung D vorzunehmen. Dazu ist das Erfassungsmodul ERFM1 mit dem Prozessausführungsmodul PAM gekoppelt.

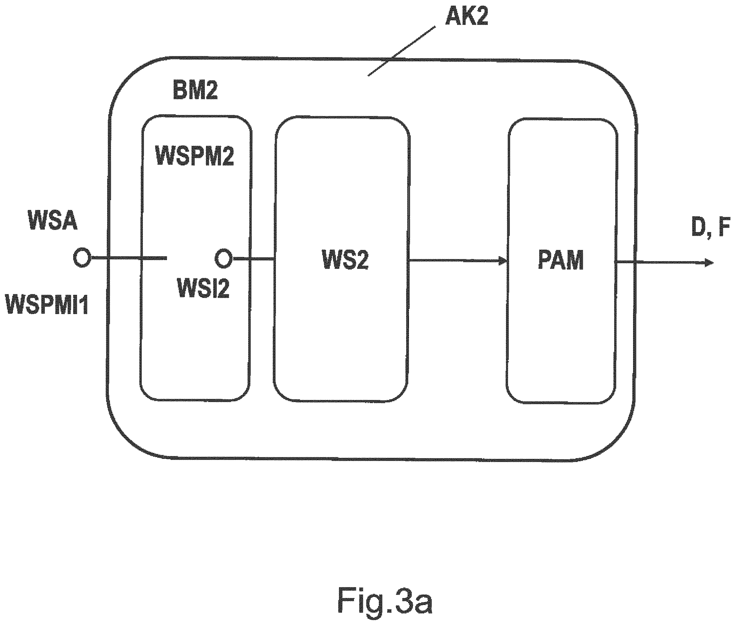

Gemäß einer bevorzugten Ausführungsform ist das Bewertungsmodul BM1 als ein in der Automatisierungskomponente AK1 integriertes Web-Service-Proxy-Modul WSPM1 ausgebildet. Weitere Ausführungsformen sind in den Fig. 3a) bis 3d) dargestellt. Das Web-Service-Proxy-Modul WSPM1 bildet eine Überwachungs-Instanz, die eine oder mehrere Funktionen als Service-Operation bereitstellt. Dabei wird durch die gerätespezifische Kommunikationsschnittstelle WSI1 das Web-Service-Proxy-Modul WSPM1 aktiviert, sobald ein Web-Service-Aufruf WSA erfolgt. Wie zuvor mit Bezug zu Fig. 2 erläutert, werden sämtliche Web-Service-Aufrufe WSA unter Berücksichtigung der definierten Parameter P einschließlich einer Zugriffsberechtigung ZB überwacht.

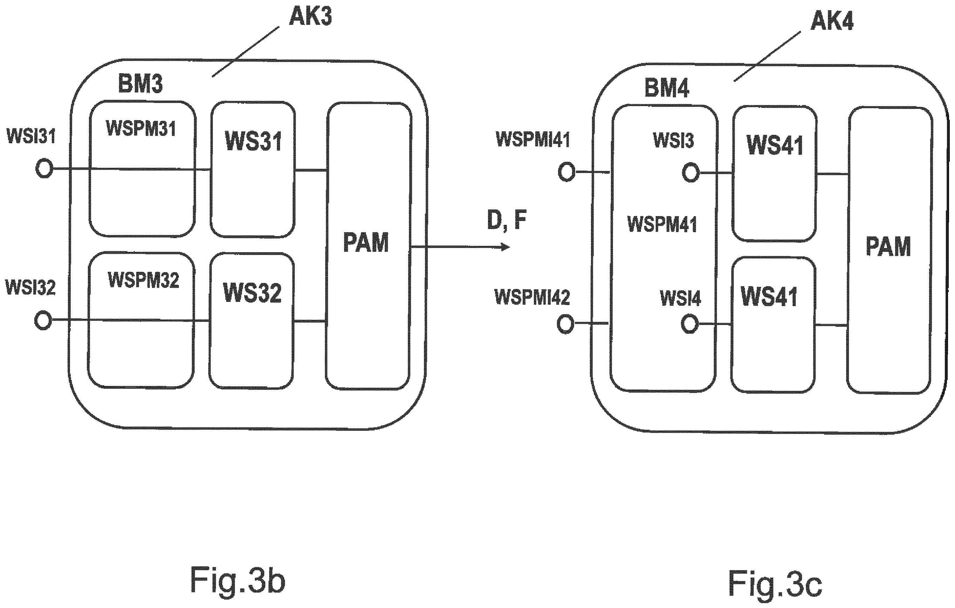

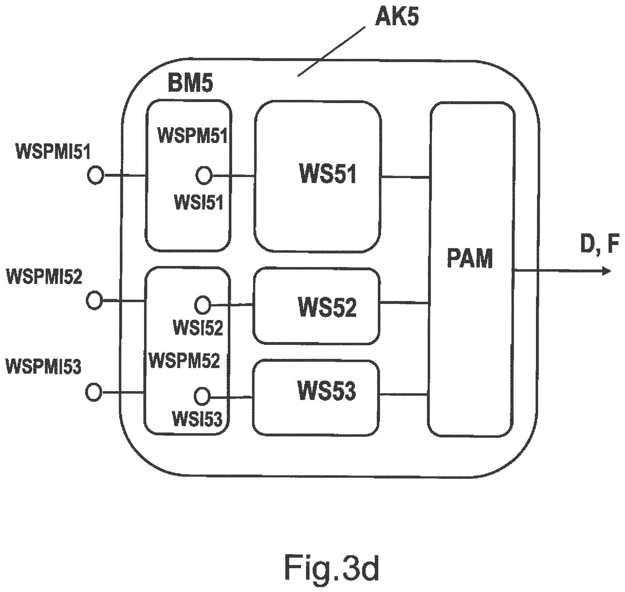

Fig. 3 a) zeigt eine Ausführungsform, wobei ein Web-Service-Proxy-Modul WSPM2 für eine Web-Service-Schnittstelle WSI2 vorgesehen ist, die alle Funktionen eines Web-Services WS2 bereitstellt. Das Web-Service-Proxy-Modul WSPM2 kann auch mehrere Web-Service-Schnittstellen WSI des Web-Services WS2 repräsentieren.

Fig. 3 b) zeigt eine Ausführungsform einer Automatisierungskomponenten AK3, die mehrere Web-Services WS31, WS32 aufweist, mit jeweils einer Web-Service-Schnittstelle WSI31, WSI32, wobei für jeden Web-Service WS31, WS32 in der Automatisierungskomponente AK3 ein dezidiertes Web-Service-Proxy-Modul WSPM31, WSPM32 vorgesehen ist.

Bei einer Ausführungsform gemäß Fig. 3c) ist für die Web-Services WS41, WS42 ein einziges Web-Service-Proxy-Modul WSPM41 mit zwei Web-Service-Schnittstellen WSPMI-41 und WSPM1-42 vorgesehen.
Fig. 3 d) zeigt eine Ausführungsform einer Automatisierungskomponente AK5, welche die Web-Services WS51, WS52, WS53 umfasst. Diese Ausführungsform umfasst sowohl ein einzelnes Web-Service-Proxy-Modul WSPM51 als auch ein kumulatives Web-Service-Proxy-Modul WSPM52 für die Web-Services WS52 und WS53.

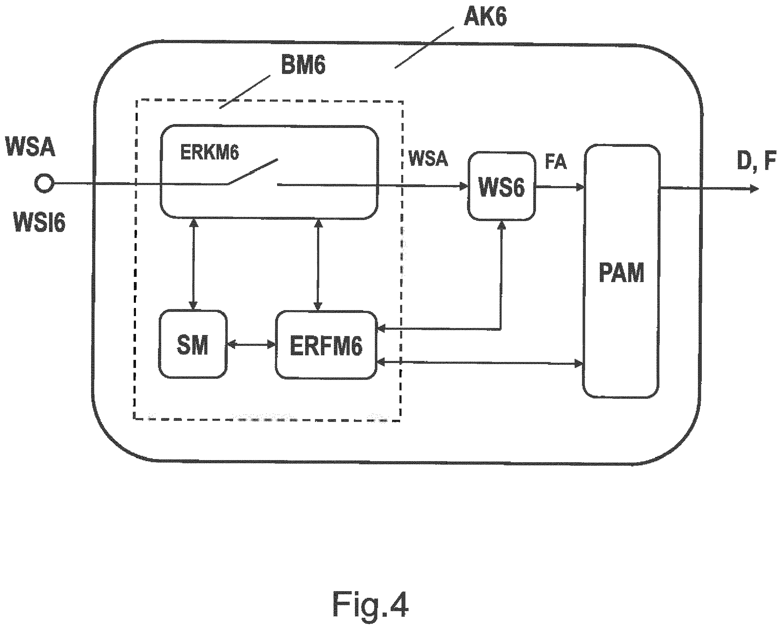

Fig. 4 zeigt eine Ausführungsform einer Automatisierungskomponente AK6 umfassend ein Bewertungsmodul BM6, welches als ein einem Web-Service WS6 vorgelagertes Hardware-Software-Modul ausgebildet ist. Das Bewertungsmodul BM6 ist in der Automatisierungskomponente AK6 implementiert. Durch das Bewertungsmodul BM6 wird eine integrierte Überwachung einer Kommunikationsschnittstelle WSI6 des Web-Services WS6 realisiert. Die Parameter P für die Bewertung der Dienstleistung D sind in dem Speichermodul SM der Automatisierungskomponente AK6 oder des Bewertungsmoduls BM2 hinterlegt. Ergänzend kann eine Überwachung einer Zugriffsberechtigung z. B. eines spezifischen Web-Service-Aufrufs WSA erfolgen.

Bei der in Fig. 4 dargestellten Ausführungsform erfolgt eine Erkennung von Nachrichten in dem Web-Service-Aufruf WSA durch Überwachung der Kommunikationsschnittstelle WSI6 mittels des Erkennungsmoduls ERKM6. Die Weiterverarbeitung der Nachrichten erfolgt in dem Erfassungsmodul ERFM6, bevor der eigentliche Web-Service WS6 aufgerufen bzw. weiterverarbeitet wird. Im Gegensatz zu der Ausführungsform gemäß Fig. 2 und 3 ist das Bewertungsmodul BM6 in die Kommunikationsschnittstelle WSI6 integriert und überwacht die Zugriffe auf den Web-Service WS6. Bei dieser Ausführungsform ist eine Veränderung der Web-Service-Nachricht nicht möglich. Die Überwachung der Kommunikationsschnittstelle WSI6 erfolgt dabei durch physikalische Messung und Auswertung von elektrischen Signalen, die über die Schnittstelle übertragen werden.

Eine dritte Variante der vorgelagerten Erkennung und Erfassung von Web-Service-Aufrufen WSA basiert auf einer Erweiterung eines verwendeten Web-Service-Protokolls WSP. Dieses i st für die Erfassung von Web-Service-Aufrufen WSA definiert. Das Web-Service-Protokoll WSP kann in einem der vorgelagerten Web-Service-Protokoll-Module WSPM1 - WSPM6 und/oder dem hardware-seitigen Bewertungsmodul BM6 integriert sein. Eine Web-Service-Nachricht kann in einem Transport-Protokoll, einem Nachrichten-Protokoll oder aufgeteilt auf beide Protokollarten enthalten sein. Somit sind alle Informationen vorgegeben, da diese von einem Anwender eingegeben werden.

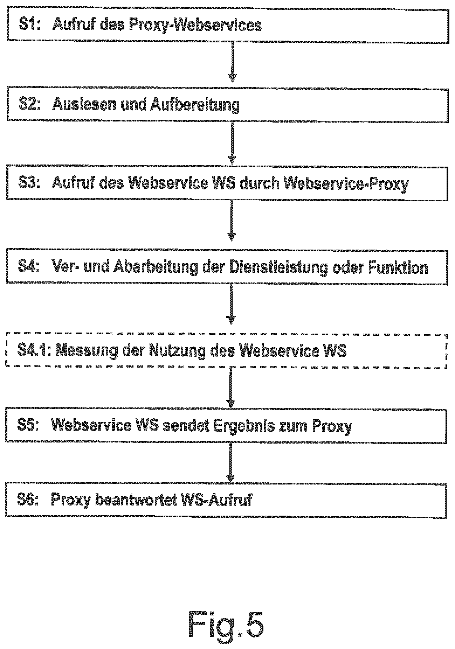

Fig. 5 zeigt rein schematisch einen Ablauf eines Verfahrens zur Erkennung, Erfassung und Weiterverarbeitung von Web-Service-Aufrufen WSA.

In einem ersten Verfahrensschritt S1 wird durch den Web-Service-Aufruf WSA zunächst das Web-Service-Proxy-Modul WSPM aufgerufen. Der Web-Service-Aufruf WSA erhält Informationen zur angeforderten Dienstleistung, die im Verfahrensschritt S2 ausgelesen und aufbereitet werden. Mögliche Träger der Informationen sind z. B. das Transportprotokoll oder das Nachrichtenprotokoll. Auch kann der Web-Service-Aufruf an sich eine Information darstellen.

In einem weiteren Verfahrensschritt S3 wird durch das Web-Service-Proxy-Modul WSPM der eigentliche Web-Service WS aufgerufen, wobei innerhalb des Web-Services WS die übertragene Information in ein für den Web-Service WS spezifisches Datenmodell übertragen wird.

Anschließend erfolgt in einem Verfahrensschritt S4 die Abarbeitung des Funktionsaufrufs durch den Web-Service WS. In diesem Verfahrensschritt S4 kann optional auch eine Messung der Benutzung der angeforderten Dienstleistung D mittels des Erfassungsmoduls ERFM erfolgen.

Aus den Informationen über die Dienstleistung und/oder Funktionen und den erfassten Benutzungsdaten werden Benutzungsinformationen erzeugt, die direkt mit dem entsprechenden Web-Service bzw. der von dem Web-Service WS erbrachten Dienstleistung in Zusammenhang stehen.
In einem weiteren Verfahrensschritt S5 werden die Benutzungsinformationen an den Web-Service-Proxy gesendet, der in einem Verfahrensschritt S6 den Web-Service-Aufruf beantwortet bzw. eine Veränderung des Web-Service-Aufrufs WSA vornimmt.

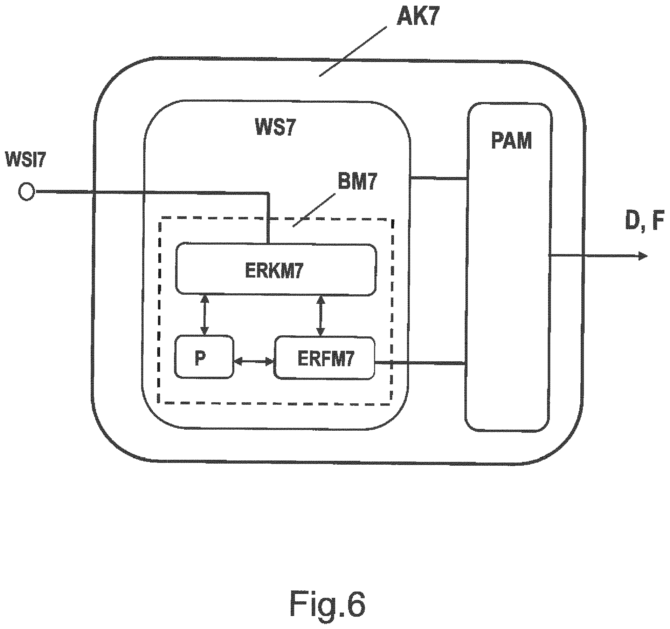

Fig. 6 zeigt eine Ausführungsform einer Automatisierungskomponente AK7, wobei ein Bewertungsmodul BM7 als Teil einer Applikation oder Steuerungssoftware innerhalb eines Web-Services WS7 integriert ist. Somit werden bei der integrierten Erkennung und Erfassung innerhalb des Web-Services WS7, z. B. als Teil einer Applikation oder Steuerungssoftware, entsprechende Web-Service-Aufrufe WSA durch ein Erkennungsmodul ERKM7 überwacht. Die durch das Erkennungsmodul ERKM7 ermittelten Informationen können sodann weiterverwendet werden. Das Bewertungsmodul BM7 umfasst ein Erfassungsmodul ERFM7, welches hinsichtlich definierter Parameter P, die der Erkennung und Erfassung der Benutzung des jeweiligen Web-Services WS7 zugrunde liegen, konfigurierbar ist.

Bei der Automatisierungskomponente AK7 ist eine Instanz des Erfassungsmoduls ERFM7 direkt in dem Web-Service WS7 integriert. Die an den Web-Service WS7 gerichteten Protokolle sind üblicherweise untergliedert in Transportprotokoll und Nachrichtenprotokoll. Unabhängig von dem jeweiligen Protokoll sind die Informationen zur integrierten Erkennung und Erfassung von Web-Service-Aufrufen WSA in den Nachrichten enthalten, so dass der Web-Service WS7 innerhalb seiner eigenen Instanz auf diese Informationen zugreifen kann.

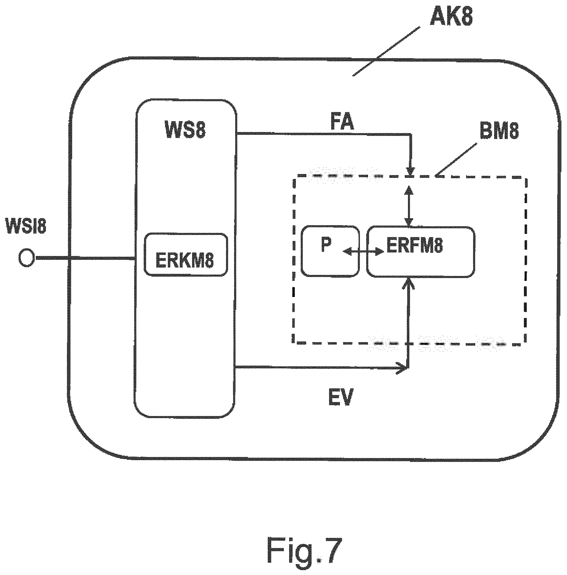

In Fig. 7 ist eine alternative Automatisierungskomponente AK8 dargestellt, wobei in einem Web-Service WS8 ein Erkennungsmodul ERKM8 integriert und ein Erfassungsmodul ERFM8 extern eindeutig zugeordnet ist. Das Erkennungsmodul ERKM8 ist als Instanz Teil der Applikation ausgebildet und überwacht die internen Aufrufe innerhalb des Web-Services WS8. Das Erfassungsmodul ERFM8 ist konfigurierbar, um Funktionsaufrufe FA zu überwachen.

Sobald der Web-Service WS8 die interne Abarbeitung startet, wird diese durch das Erfassungsmodul ERFM8 erfasst. Der Web-Service WS8 sendet automatisch eine Benachrichtigung mit den entsprechenden Informationen, die das Erkennungsmodul ERKM8 zuvor aus dem Nachrichten- und/oder Transportprotokoll ausgelesen hat.

Bei dieser Ausführungsform wird ein Web-Service-Protokoll definiert, das es ermöglicht, zusätzliche Informationen zu transportieren, die zur Erfassung und Abrechnung benutzt werden können. Der Web-Service WS8 bearbeitet Nachrichten, die in dem Transportprotokoll oder Nachrichtenprotokoll enthalten sind, direkt in seiner eigenen Instanz. Bei den verwendeten Protokollen handelt es sich jedoch nicht um übliche Protokolle, sondern um die Erweiterung herkömmlicher Protokolle wie beispielsweise HTML oder SOAP mit Erweiterung für das oben beschriebene Verfahren.

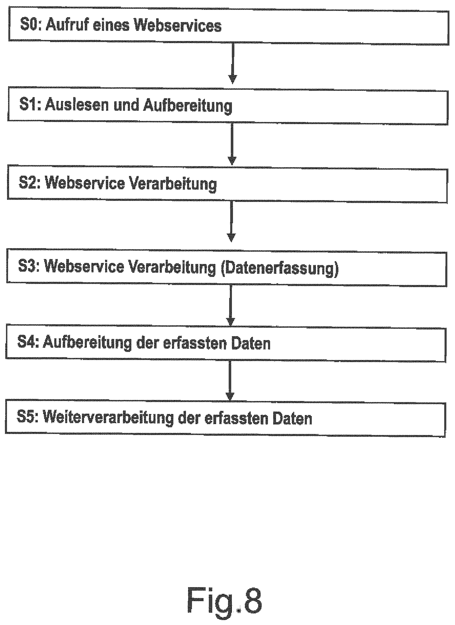

Fig. 8 zeigt rein schematisch einen Verfahrensablauf für die web-service-integrierte Erkennung, Erfassung und Weiterverarbeitung von Web-Service-Aufrufen. Nach einem Web-Service-Aufruf WSA im Verfahrensschritt S0 erfolgt in einem Verfahrensschritt S1 ein Auslesen von Leistungsinformationen aus dem Web-Service-Aufruf. Die Leistungsinformationen können beispielsweise in einem Transportprotokoll, Nachrichtenprotokoll und/oder in dem Web-Service-Aufruf selbst enthalten sein.

In einem nächsten Verfahrensschritt S2 wird innerhalb z. B. des Web-Services WS7 die empfangene Leistungsinformation in ein für den Web-Service WS7 spezifisches Datenmodell übertragen.

Sodann erfolgt im Verfahrensschritt S3 die Abarbeitung des Funktionsaufrufs FA durch den Web-Service WS7, wobei durch die Automatisierungskomponente AK7 die geforderte Dienstleistung ausgeführt wird. Optional kann eine Messung der Benutzung der Dienstleistung erfolgen.

Anschließend werden in einem Verfahrensschritt S4 die erfassten Daten aufbereitet, wobei aus den ermittelten Leistungsinformationen, wie z. B. Art der Dienstleistung und den erfassten Benutzungsdaten, Benutzungsinformation erzeugt werden, die direkt mit dem entsprechenden Web-Service in Zusammenhang stehen.

In einem weiteren Verfahrensschritt S5 erfolgt eine Weiterverarbeitung der erfassten Daten, wobei die Leistungsinformationen und/oder Benutzungsinformationen an das Erfassungsmodul ERFM7, ERFM8 weitergeleitet und in diesem weiterverarbeitet werden. Das Erfassungsmodul ERFM7 ist in dem Web-Service WS7 integriert während das Erfassungsmodul ERFM8 außerhalb des Web-Service WS7 implementiert ist.

Der Web-Service WS7, WS8 ruft das Erfassungsmodul ERFM7, ERFM8 auf und benutzt dessen Antwort als einziger Empfänger, um die Weiterverarbeitung mit dem eigentlichen Funktionsaufruf FA zu starten. Das Erfassungsmodul ERFM7 als auch das Erfassungsmodul ERFM8 ist dem Web-Service WS7 bzw. WS8 zugeordnet.

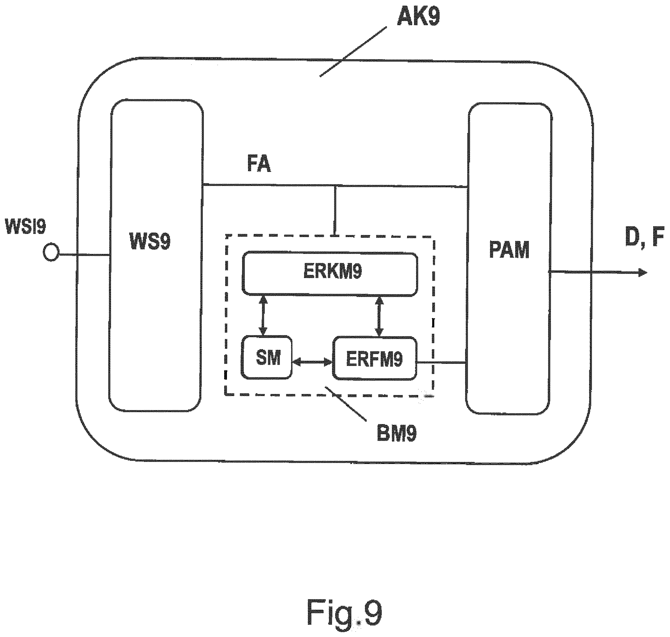

Fig. 9 zeigt eine Ausführungsform einer Automatisierungskomponente AK9, wobei die Erkennung und Erfassung von Web-Service-Aufrufen WSA durch ein Bewertungsmodul BM9 erfolgt, welches einem Web-Service WS9 nachgelagert ist. Das Bewertungsmodul BM9 ist in einer eigentlichen Software-Applikation bzw. in einem Hardwaremodul PAM der Automatisierungskomponente AK9 gemeinsam mit dem Web-Service WS9 implementiert.

Bei dem in Fig. 9 dargestellten Ausführungsbeispiel der Automatisierungskomponente AK9 werden von dem Web-Service WS9 an das Prozessausführungsmodul PAM gerichtete Funktionsaufrufe FA durch ein Erkennungsmodul ERKM9 überwacht. Zu diesem Zweck ist eine Kommunikations- bzw. Datenzugriffsarchitektur realisiert, welche Informationen bzw. Ereignisse für das Erkennungsmodul ERKM9 bereitstellt. Die Kommunikations- bzw. Datenzugriffsarchitektur ist konfigurierbar, wobei der Zugriff je nach Konfiguration und Berechtigung beschränkt werden kann. Das Bewertungsmodul BM9 weist eine Struktur auf, wie diese in Fig. 2 dargestellt ist.

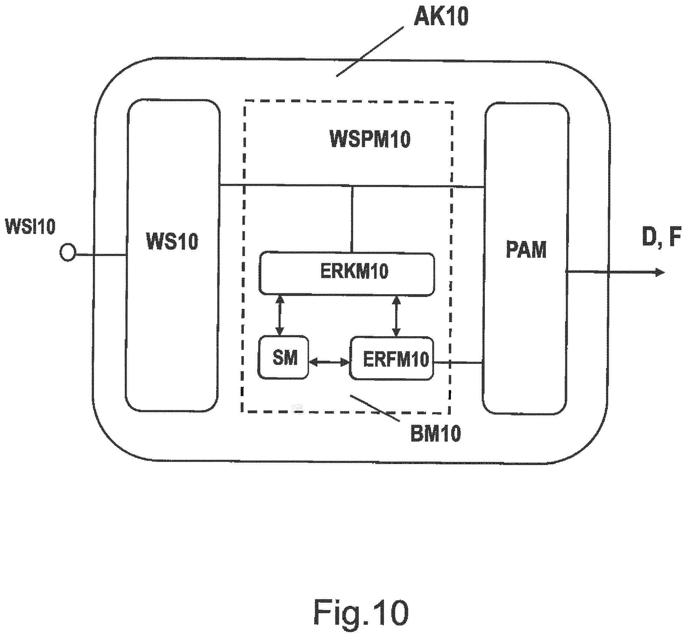

Fig. 10 zeigt eine Ausführungsform einer Automatisierungskomponente AK10, bei der dem eigentlichen Web-Service WS10 ein Web-Service-Proxy WSPM10 als Bewertungsmodul BM10 nachgelagert ist. Bei einem Web-Service-Aufruf WSA, der innerhalb des Gerätes weitere Web-Service-Aufrufe zur Folge hat, wird mittels eines Erkennungsmoduls ERKM10 und eines Erfassungsmoduls ERFM10, welche dem aufgerufenen Web-Service WS10 nachgelagert sind, eine Erfassung der Web-Service-Aufrufe unter Berücksichtigung von Parametern P realisiert. Das Erfassungsmodul ERFM10 ist den unterschiedlichen Gegebenheiten der internen Geräte angepasst.

Im Gegensatz zu der in Fig. 9 dargestellten Ausführungsform wird der Nachrichtenfluss durch das Bewertungsmodul BM10, welches als Web-Service-Proxy ausgebildet ist, vor der Weiterleitung an das Prozessausführungsmodul PAM unterbrochen und ist gegebenenfalls in der Lage, die Nachricht zu verändern. Somit können ausgehend von dem Bewertungsmodul BM10 in Abhängigkeit von der gesendeten Nachricht spezifische Nachrichten weitergeleitet werden.

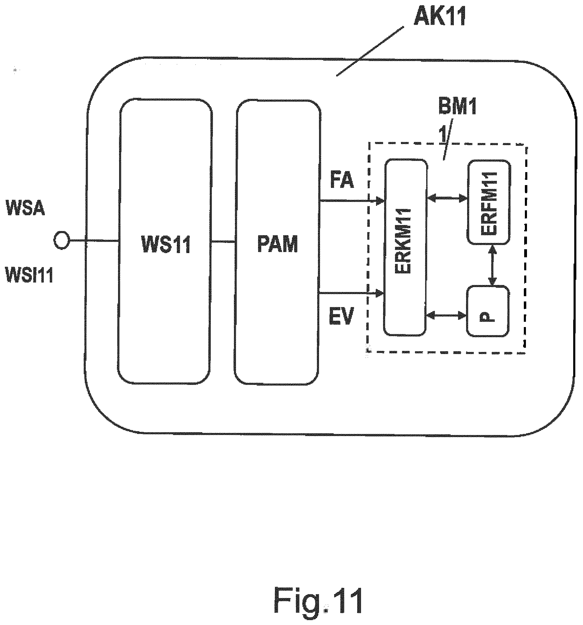

Fig. 11 zeigt eine Ausführungsform einer Automatisierungskomponente AK11, wobei eine Überwachung des Prozessausführungsmoduls PAM, welche von dem Web-Service WS 11 aufgerufen wird, durch ein Bewertungsmodul BM11 erfolgt. Durch das Bewertungsmodul BM11 werden Funktionsaufrufe FA bzw. Datenzugriffe, welche von dem Web-Service-Aufruf WSA ausgelöst werden, hardware-seitig und/oder softwareseitig überwacht. Im Gegensatz zu den Ausführungsformen gemäß Fig. 9 und 10 werden die Web-Service-Aufrufe bzw. deren Nachrichten nicht direkt überwacht, sondern diese werden indirekt über die Aktivitäten des Prozessausführungsmoduls PAM oder eines speziellen Teils der Automatisierungskomponente überwacht, die von dem Web-Service WS funktional, entweder direkt oder indirekt, aufgerufen werden.

Unabhängig davon können auch Kombinationen der in den Fig. 9, 10 und 11 dargestellten Ausführungsformen benutzt werden. Beispielsweise ist eine Ausführungsform realisierbar, bei der das als Web-Service-Proxy WSPM ausgeführte Bewertungsmodul BM10 in Kombination mit dem in Fig. 11 dargestellten Bewertungsmodul BM11 kombiniert wird. Bei dieser Ausführungsform wird bei einem Web-Service-Aufruf WSA das Bewertungsmodul BM10 das Bewertungsmodul BM11 starten. Dadurch wird der Vorteil erreicht, dass beispielsweise der Energieverbrauch des Bewertungsmoduls BM11 reduziert wird, der sonst durch die fortlaufende Überwachung des Prozessausführungsmoduls entstehen würde. Bei dieser Ausführungsform ist eine Kommunikationsverbindung zwischen dem Bewertungsmodul BM10 und dem Bewertungsmodul BM11 vorgesehen, um eine direkte oder indirekte Kommunikation zwischen den Modulen zu realisieren.

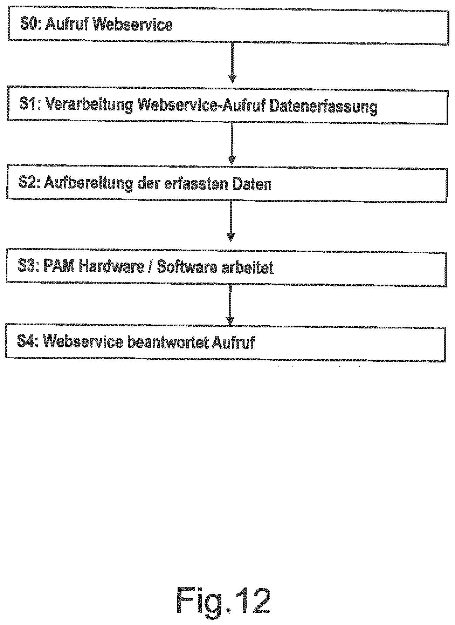

Fig. 12 zeigt in schematischer Darstellung einen Verfahrensablauf, der durch die in Fig. 9 bis 11 dargestellten Ausführungsformen von Automatisierungskomponenten AK9 - AK11 und Erfassungsmodulen realisierbar ist.

Nach einem Web-Service-Aufruf im Verfahrensschritt S0 erfolgt in einem Verfahrensschritt S1 die Verarbeitung des Web-Service-Aufrufs, wobei der Web-Service WS den Funktionsaufruf abarbeitet. In einem Verfahrensschritt S2 werden die erfassten Daten durch das nachgelagerte Erfassungsmodul ERFM erfasst.

Sodann wird im Verfahrensschritt S3 die Dienstleistung durch das Prozessausführungsmodul abgearbeitet.

Nach Abarbeitung der Dienstleistung durch das Prozessausführungsmodul PAM wird in einem Verfahrensschritt S4 der Web-Service-Aufruf WSA beantwortet.

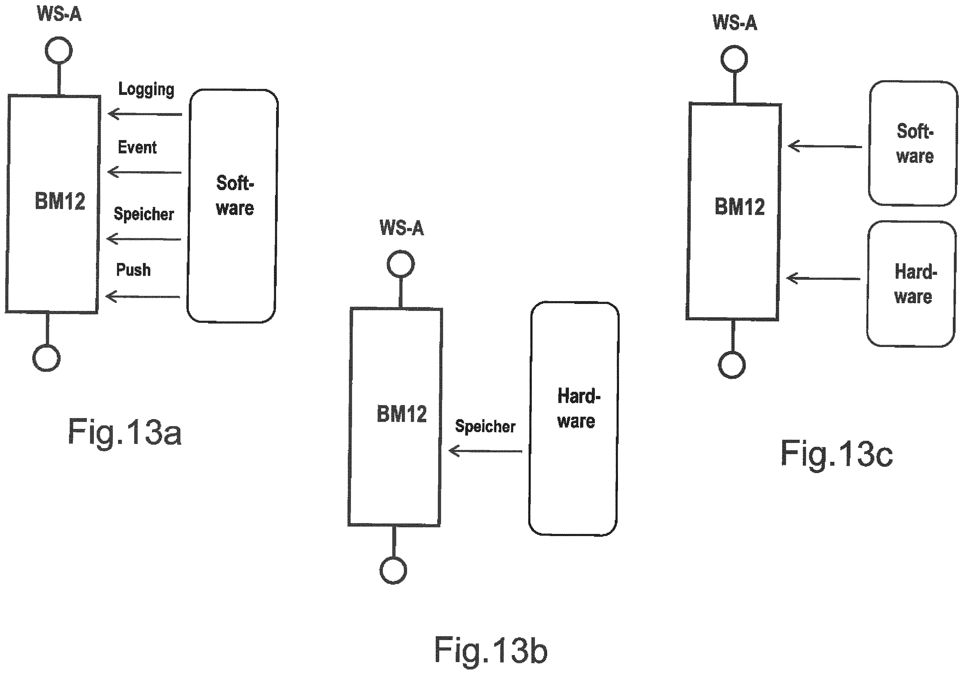

Die Fig. 13 a) bis 13 c) zeigen Konfigurationen eines Bewertungsmoduls BM12, durch die eine Bewertung der erfassten Web-Service-Aufrufe WSA zu unterschiedlichen Zeitpunkten realisierbar ist. Die Zeitpunkte können dabei entsprechend konfiguriert werden.

Eine Bewertung, ob ein Web-Service-Aufruf WSA für eine Abrechnung einer Dienstleistung D relevant ist, wird von dem in dem Bewertungsmodul BM12 implementierten Erkennungsmodul ERKM (Überwachungsinstanz) wie zuvor beschrieben, vorgenommen. Eingehende Web-Service-Aufrufe WSA werden zum Zeitpunkt des Eingangs registriert und bewertet.

Eine Bewertung kann auch erfolgen, sobald ein Ergebnis eines Funktionsaufrufs FA, der durch den jeweiligen Web-Service WS initiiert wurde, vorliegt.

Eine weitere Möglichkeit zur Bewertung wird durch Aufzeichnung der ausgelösten Funktionsaufrufe bzw. der Hardwarezugriffe erreicht (Fig. 13 b)).

Auch ist eine Kombination obiger Verfahren möglich, wobei durch eine vorgelagerte Erkennung von Web-Service-Aufrufen eine nachgelagerte Erkennung gestartet wird, welche sodann mit den durch die Parameter P vorgegebenen Informationen konfiguriert wird (Fig. 13 c)).

Die Entscheidung, ob relevante, den konfigurierten Erfassungsparametern entsprechende Zugriffe vorliegen, kann durch unterschiedliche Verfahren erfolgen, die im Zusammenhang mit den Fig. 13 a) bis 13 c) erläutert werden.

Fig. 13 a) zeigt z. B. die Definition und Benutzung von spezifischen Events bzw. Schlüsselwörtern im Aufruf bzw. beim Zugriff auf Daten und Funktionen per Software. Eine Überwachung der gespeicherten Daten mittels einer Hardware-Komponente HK ist in Fig. 13 b) dargestellt. Fig. 13 c) zeigt eine Kombination der in Fig. 13 a) und 13 b) gezeigten Verfahren.

Für eine Bewertung einer erbrachten Dienstleistung D bzw. eines Web-Service-Aufrufs können folgende Daten zugrunde gelegt werden:
Beginn und Ende eines Web-Service-Aufrufs WSA,
Beginn und Ende eines Web-Service-Funktionsaufrufs FA,
Beginn und Ende eines Aufrufs anderer Librarys oder Funktionen (Software),
Beginn und Ende eines Hardware-Aufrufs sowie Werte innerhalb von Funktionsergebnissen.

Die erfindungsgemäßen Verfahren ermöglichen insbesondere ein regelbasiertes und für die jeweilige Automatisierungskomponente eindeutig identifizierbare Erkennung und Erfassung von darin integrierten Diensten, insbesondere für die Benutzung eines oder mehrerer Web-Services für Datenaustausch, Diagnose bzw. Fernwartung, z. B. in cloud-basierten Systemen oder innerhalb eines Automatisierungssystems.

Die Dienste werden über festgelegte Parameter, z. B. Service-Level-Agreements konfiguriert bzw. kontrolliert.

Somit wird eine direkte Erkennung und Erfassung der vom jeweiligen Web-Service repräsentierten Dienstleistung ermöglicht, sobald der Web-Service in einer Automatisierungskomponente wie Automatisierungsgerät, Messgerät oder Sensor integriert wird. Die Parameter für die Erfassung bzw. die Bewertung der benutzten Web-Services sind konfigurierbar.

## Patentansprüche

1. Verfahren zur Bewertung einer Nutzung einer von einem Web-Service (WS1;...;WS11) bereitgestellten oder aufgerufenen Leistung (D) und/oder Funktion (F), umfassend die Verfahrensschritte:
Erkennen eines Web-Service-Aufrufs (WSA),
Erfassen von Informationen betreffend die von dem Web-Service (WS1...; WS 11) bereitgestellten oder aufgerufenen Leistung (D) und/oder Funktion (F) und
Bewerten der Nutzung der bereitgestellten oder aufgerufenen Leistung (D) und/oder Funktion (F) auf der Grundlage von Parametern und der erfassten Informationen, wobei der Webservice (WS1;...;WS11) in einer Automatisierungskomponente (AK1;...;AK11) implementiert ist;
**dadurch gekennzeichnet,**
**dass** der in der Automatisierungskomponente (AK1; ...; AK11) implementierte Web-Service (WS1; ...; WS11) zur Ausführung der Leistung (D) und/oder Funktion (F) durch einen Web-Service-Aufruf (WSA) lokal aufgerufen wird, dass der Web-Service-Aufruf (WSA) oder ein von dem Web-Service (WS1; ...; WS11) generierter Funktionsaufruf (FA) mittels eines in der Automatisierungskomponente (AK1; ...; AK11) implementierten Erkennungsmoduls (ERKM1; ...; ERKM11) lokal erkannt wird,
**dass** die Parameter als komponentenspezifische Erkennung- und Bewertungsarameter (P, SLAG) zur Erkennung und Erfassung von Web-Service-Aufrufen (WSA) in Form von Service-Level-Agreements lokal in einem Speicherelement (SM) der Automatisierungskomponenten (AK1; ...; AK11) gespeichert werden,
**dass** eine in dem Web-Service-Aufruf (WSA) oder dem Funktionsaufruf (FA) enthaltende Leistungs- und/oder Funktions-Information betreffend die aufgerufene Leistung (D) und/oder Funktion (F) mittels des Erkennungsmoduls (ERKM1; ...; ERKM11) lokal ausgelesen, in dem Speicherelement (SM) lokal gespeichert und mit den gespeicherten Erfassungsparametern verglichen werden,
**dass** der Web-Service (WS1; ...; WS11) bei Übereinstimmung der Leistungs- und Funktions-Information mit einem der Erkennungsparameter durch das Erkennungsmodul (ERKM1;...; ERKM11) freigegeben und ausgeführt wird,
**dass** während der Ausführung des Web-Services (WS1; ...; WS11) leistungs- und/oder funktionsspezifische Daten mittels eines in der Automatisierungskomponente lokal implementierten Erfassungsmoduls (ERFM1; ...; ERFM111) erfasst und in dem Speichermodul (SM) gespeichert werden und
**dass** die von der Automatisierungskomponente (AK1; ...; AK11) bereitgestellte Leistung (D) und/oder Funktion (F) auf der Grundlage der Leistungs- und/oder Funktionsinformation, der erfassten leistungs- und/oder funktionsspezifischen Daten und der lokal definierten Bewertungsparameter lokal bewertet wird.

2. Verfahren nach Anspruch 1,
**dadurch gekennzeichnet,**
**dass** der Web-Service-Aufruf (WSA) durch ein dem Web-Service (WS1; ..., WS7) vorgelagertes Web-Service-Proxy-Modul (WSPM1; WSPM25) erkannt und ausgelesen wird und/oder dass der Web-Service-Aufruf (WSA) durch das in einer Kommunikationsschnittstelle integrierte und dem Web-Service vorgelagerte hardware-basierte Erkennungsmodul (ERKM6) erkannt wird, wobei die in dem Web-Service-Aufruf (WSA) enthaltene Leistungs- und/oder Funktions-Information durch Messen von über die Kommunikationsschnittstelle übertragenen physikalischen Signalen ausgelesen wird und/oder dass für den Web-Service-Aufruf (WSA) ein Web-Service-Protokoll verwendet wird, welches die Leistungs- und/oder Funktions-Information in einem Transportprotokoll und/oder einem Nachrichtenprotokoll und/oder aufgeteilt auf beide Protokollarten des Web-Service-Protokolls enthält.

3. Verfahren nach Anspruch 2,
**dadurch gekennzeichnet,**
**dass** das Web-Service-Proxy-Modul (WSPM1; ...; WSPM5) durch eine gerätespezifische Kommunikationsschnittstelle aktiviert wird, sobald der Web-Service-Aufruf (WSA) erfolgt und/oder dass das Web-Service-Proxy-Modul (WSPM1; ...; WSPM5) die in dem Web-Service-Aufruf (WSA) enthaltene Leistungs- und/oder Funktions-Information ausliest, aufbereitet und anschließend den entsprechenden Web-Service (WS1; ...; WS7) startet.

4. Verfahren nach zumindest einem der vorhergehenden Ansprüche,
**dadurch gekennzeichnet,**
**dass** der Web-Service (WS1; ...; WS7) nach Ausführung des Funktionsaufrufs (FA) ein Ergebnis an das Web-Service-Proxy-Modul (WSPM1; WSPM25) zurücksendet und dass das Web-Service-Proxy-Modul (WSPM1; WSPM25) den Web-Service-Aufruf (WSA) beantwortet.

5. Verfahren nach Anspruch 1,
**dadurch gekennzeichnet,**
**dass** der Web-Service-Aufruf (WSA) durch das in dem Web-Service (WS7; WS8) integrierte Erkennungsmodul (ERKM7, ERKM8) erkannt und ausgelesen wird, dass die ausgelesenen Informationen an das in dem Web-Service (WS7) integrierte oder an das dem Web-Service (WS7; WS8) eindeutig zugeordnete Erfassungsmodul (ERFM8) übertragen werden und/oder dass das Erfassungsmodul (ERFM8) interne Web-Service-Aufrufe innerhalb des jeweiligen Web-Services (WS8) überwacht und nach Ausführung des Web-Services (WS8) dessen Abarbeitung erfasst, wobei der Web-Service (WS8) automatisch eine Benachrichtigung mit den Leistungs- und/oder Funktions-Informationen sendet, die das Erkennungsmodul (ERKM8) zuvor aus dem Nachrichten- und/oder Transportprotokoll ausgelesen hat.

6. Verfahren nach Anspruch 1,
**dadurch gekennzeichnet,**
**dass** die bei der Ausführung des Web-Services (WS7, WS8) erzeugten leistungs- und/oder funktionsspezifischen Daten durch das in dem Web-Service (WS7) integrierte Erfassungsmodul (ERFM7) erfasst werden und/oder dass der Web-Service (WS7) innerhalb seiner eigenen Instanz auf die in dem Web-Service-Protokoll enthaltenen Leistungs- und/oder Funktions-Informationen zugreift.

7. Verfahren nach zumindest einem der vorhergehenden Ansprüche,
**dadurch gekennzeichnet,**
**dass** der Web-Service (WS7, WS8) das Erfassungsmodul (ERFM7, ERFM8) aufruft und dessen Antwort als einziger Empfänger benutzt und die Weiterverarbeitung mit dem eigentlichen Funktionsaufruf (FA) in der Automatisierungskomponente (AK) startet.

8. Verfahren nach Anspruch 1,
**dadurch gekennzeichnet,**
**dass** die Erkennung des Web-Service-Aufrufs (WSA1) indirekt durch Erkennung eines von dem Web-Service (WS9) an das Prozessausführungsmodul (PAM) gerichteten Funktionsaufruf (FA) in der Automatisierungskomponente (AK) erfolgt und dass die durch den Funktionsaufruf (FA) ausgeführten Aktionen durch das Erfassungsmodul (ERFM9, ERFM10) erfasst werden, wobei vorzugsweise die Erkennung und Erfassung mittels eines dem Web-Service (WS10) nachgelagerten Web-Service-Proxy-Modul (WSPM10) erfolgt.

9. Verfahren nach zumindest einem der vorhergehenden Ansprüche,
**dadurch gekennzeichnet,**
**dass** eine Kommunikations- und/oder Datenzugriffsarchitektur bereitgestellt wird, welche die Leistungs- und/oder Funktions-Informationen bzw. Ereignisse für das Erfassungsmodul (ERFM9) bereitstellen.

10. Verfahren nach zumindest einem der vorhergehenden Ansprüche,
**dadurch gekennzeichnet,**
**dass** die Funktionsaufrufe (FA) und/oder Datenzugriffe auf das Prozessausfiihrungsmodul (PAM) mittels des Erfassungsmoduls (ERFM9, ERFM10) hardwareseitig oder softwareseitig überwacht werden, wobei insbesondere Aktivitäten der Automatisierungskomponente oder eines speziellen Teils der Automatisierungskomponente (AK) überwacht werden, die von dem Web-Service funktional direkt oder indirekt aufgerufen werden.

11. Verfahren nach zumindest einem der vorhergehenden Ansprüche,
**dadurch gekennzeichnet,**
**dass** das die Funktionsaufrufe (FA) und/oder leitungs- und/oder funktionsspezifische Daten erfassende Erfassungsmodul (ERFM10) durch das Web-Service-Proxy-Modul (WSPM10) aufgerufen wird, wobei eine direkte oder indirekte Kommunikation zwischen dem Web-Service-Proxy-Modul (WSPM) und dem Erfassungsmodul (ERFM) erfolgt.

12. Verfahren nach zumindest einem der vorhergehenden Ansprüche,
**dadurch gekennzeichnet,**
**dass** die Entscheidung, ob relevante, den konfigurierten Erkennungs- und/oder Bewertungsparametern entsprechende Web-Services oder Funktionsaufrufe vorliegen, durch Definition und Benutzung von spezifischen Ereignissen oder Schlüsselwörtern im Web-Service oder Funktionsaufrufe oder beim Zugriff auf Daten und Funktionen mittels Software und/oder hardwareseitiger Überwachung der gespeicherten Daten erfolgt.

13. Verfahren nach zumindest einem der vorhergehenden Ansprüche,
**dadurch gekennzeichnet,**
**dass** die Leistungs- und/oder Funktions-Information durch ein Web-Service-Protokoll, vorzugsweise ein Transportprotokoll, Nachrichtenprotokoll und/oder eine Leistungs- und/oder Funktions-Information aufgeteilt auf beide Protokolle übertragen wird.

14. Verfahren nach zumindest einem der vorhergehenden Ansprüche,
**dadurch gekennzeichnet,**
**dass** der Web-Service-Aufruf (WSA) selbst als die Leistungs- und/oder Funktions-Information erfasst wird.

15. Verfahren nach zumindest einem der vorhergehenden Ansprüche,
**dadurch gekennzeichnet,**
**dass** die übertragene Leistungs- und/oder Funktions-Information innerhalb des Web-Services (WS1;...; WS11) in ein für den Web-Service (WS1; ...; WS11) spezifisches Datenmodell übertragen wird.

16. Verfahren nach zumindest einem der vorhergehenden Ansprüche,
**dadurch gekennzeichnet,**
**dass** während der Ausführung des Web-Services (WS1; ...; WS11) leistungs- und/oder funktionsspezifische Daten in Form von Benutzungsdauer, Anzahl der Funktionsaufrufe, Werte innerhalb von Funktionsergebnissen erfasst wurden.

17. Verfahren nach Anspruch 1,
**dadurch gekennzeichnet,**
**dass** die Bewertung der von der Automatisierungskomponente (AK1; ...; AK9) bereitgestellten Leistungen (D) und/oder Funktionen (F) durch Vorgabe der Bewertungsparameter konfiguriert wird, vorzugsweise in Form von Service-Level-Agreements, wobei die Bewertungsparameter vorzugsweise in der Automatisierungskomponente (AK1; ...; AK9) oder in einer externen Komponente gespeichert werden.

18. Automatisierungskomponente (AK1; ...; AK11) umfassend ein Prozessausführungsmodul (PAM) zur Ausführung einer Leistung (D) und/oder Funktion (F),
wobei in der Automatisierungskomponente (AK1; ...; AK11) zumindest ein Web-Service (WS1; ...; WS 11) implementiert ist,
umfassend eine Web-Service-Schnittstelle (WSI) zum Empfang eines Web-Service-Aufrufs (WSA) sowie eine Schnittstelle zur Übertragung eines Funktionsaufrufs (FA) an das Prozessausfiihrungsmodul (PAM) zur Ausführung der Leistung (D) und/oder der Funktion (F),
**dadurch gekennzeichnet,**
**dass** in der Automatisiserungskomponente (AK1; ...; AK11) ein Bewertungsmodul (BM1; ...; BM14) implementiert ist, umfassend ein konfigurierbares Speichermodul (SM), in dem komponentenspezifische Parameter (P, LAG) in Form von Erkennungs- und Bewertungsparametern zur Erkennung und Bewertung der Web-Service-Aufrufe (WSA) lokal speicherbar sind, ein mit der Web-Service-Schnittstelle verbundenes Erkennungsmodul (ERKM1; ....; ERKM11) zur Erkennung einer in dem Web-Service-Aufruf oder dem Funktionsaufruf (FA) enthaltenen Leistungs- und/oder Funktions-Information, sowie zur Freigabe der Ausführung des Web-Services (WS1; ...; WS11) und/oder des Funktionsaufrufs auf der Grundlage eines Vergleichs der Leistungs- und/oder Funktions-Information mit den Erkennungsparametern,
ein mit dem Prozessausfiihrungsmodul, dem Erkennungsmodul sowie dem Speicherelement (SM) gekoppeltes Erfassungsmodul (ERFM1; ...; ERFM11) zur Erfassung von leistungs- und/oder funktionsspezifischen Daten während der Ausführung des Web-Services und zur Bewertung der von der Automatisierungskomponente (AK1; ...; AK11) bereitgestellten Leistung (D) und/oder Funktion (F) auf der Grundlage der Leistungs- und/oder Funktions-Information, der lokal erfassten leistungs- und/oder funktionsspezifischen Daten sowie der lokal konfigurierten und gespeicherten Bewertungsparameter.

19. Automatisierungskomponente nach Anspruch 18,
**dadurch gekennzeichnet,**
**dass** das Bewertungsmodul (BM1, BM3, BM4, BM5) als zumindest ein dem Web-Service (WS1) vorgelagertes Web-Service-Proxy-Modul (WSPM1; ...; WSPM5) ausgebildet ist und /oder dass das Automatisierungsgerät (AK1, ... ,AK11) ein Steuergerät, ein Messgerät, oder SCADA ist.

20. Automatisierungskomponente nach Anspruch 18 oder 19,
**dadurch gekennzeichnet,**
**dass** jedem Web-Service (WS2, WS31, WS32, WS51) ein Web-Service-Proxy-Modul (WSPM2, WSPM31, WSPM32, WSPM51) zugeordnet ist und/oder dass ein Web-Service-Proxy-Modul (WSPM41) mehreren Web-Services (WS41, WS42) zugeordnet ist.

21. Automatisierungskomponente nach Anspruch 18,
**dadurch gekennzeichnet,**
**dass** das Erkennungsmodul (ERKM1; ...; ERKM5) als eine Software-Komponente in einem Kommunikations-Stack des Web-Service-Proxy-Moduls (WSPM1; ...; WSPM5) implementiert ist und/oder dass das Erkennungsmodul (ERKM6) als ein in einer Kommunikationsschnittstelle der Automatisierungskomponente (AK6) integrierter Hardware/Software-Baustein ausgebildet ist, mittels dem über die Kommunikationsschnittstelle übertragene Signale messbar sind und/oder dass das Erkennungsmodul (ERKM7, ERKM8) in dem Web-Service (WS7) integriert ist und/oder dass das Erfassungsmodul (ERFM7) entweder in dem Web-Service (WS7) integriert oder dem Web-Service (WS7) extern als Bestandteil der Automatisierungskomponente (AK7) eindeutig zugeordnet ist und/oder dass das Erfassungsmodul (ERKM9, ERKM10) sowie das Erfassungsmodul (ERFM9, ERFM10) dem Web-Service (WS9) nachgelagert sind und Funktionsaufrufe (FA) des Web-Services (WS9) überwachen.

22. Automatisierungskomponente nach Anspruch 18 bis 21,
**dadurch gekennzeichnet,**
**dass** das Erkennungsmodul (ERKM10) und das Erfassungsmodul (ERFM10) in einem dem Web-Service (WS10) nachgelagerten Web-Service-Proxy-Modul (WSPM10) integriert sind.

23. Automatisierungskomponente nach Anspruch 18 bis 22,
**dadurch gekennzeichnet,**
**dass** das Bewertungsmodul (BM11) als Hardware-/Software-Komponente mit dem Prozessausfiihrungsmodul (PAM) gekoppelt ist, wobei Funktionsaufrufe (FA) und/oder Datenzugriffe, welche von dem Web-Service (WS11) ausgelöst werden, überwacht werden.

## Claims

1. Method for assessing a use of a service (D) and/or function (F) provided or called by a web service (AK1; ...; AK11), comprising the process steps:
recognizing a web service call (WSA),
recognizing information concerning the service (D) and/or function (F) provided or called by the web service (WS1; WS11), and
assessing the use of the service (D) and/or function (F) provided or called, on the basis of parameters and the information captured, wherein the web service (WS1; ...; WS 11) is implemented in an automation component (AK1; ...; AK11)
**characterized in that**
the web service (WS1; ...; WS11) implemented in the automation component (AK1; ...; AK11) is called locally for the performance of the service (D) and/or function (F) by a web service call (WSA),
**in that** the web service call (WSA) or a function call (FA) generated by the web service (WS1; ...; WS11) is locally recognized by means of a recognition module (ERKM1; ...; ERKM11) implemented in the automation component (AK1; ...; AK11),
**in that** component-specific parameters (P, SLAG) are stored for the recognizing and capturing of web service calls (WSA) in the form of service level agreements locally in a storage element (SM) of the automation components (AK1; ...; AK11),
**in that** service and/or function information concerning the called service (D) and/or function (F) and contained in the web service call (WSA) or in the function call (FA) is locally read out by means of the recognition module (ERKM1; ...; ERKM11) and locally stored in the storage element (SM) and compared to the stored capturing parameters,
**in that** the web service (WS1; ...; WS11) in the case of conformity of a recognition parameter is approved and performed by the recognition module (ERKM1; ...; ERKM11),
**in that**, during the performance of the web service (WS1; ...; WS11), service and/or function-specific data is captured by means of a capturing module (ERFM1; ...; ERFM11) locally implemented in the automation component, and stored in the storage module (SM), and
**in that** the service (D) and/or function (F) provided by the automation component (AK1; ...; AK11) is(are) locally assessed on the basis of the service and/or function information, of the service- and/or function-specific data, and of the locally defined assessment parameters.

2. Method according to claim 1, **characterized in that** the web service call (WSA) is recognized and read out by a web service proxy module (WSPM1; WSPM25) upstream of the web service (WS1; ...; WS7), **in that** the web service call (WSA) is recognized by a hardware-based recognition module (ERKM6) integrated in a communication interface and located upstream of the web service, and **in that** the service and/or function information contained in the web service call (WSA) is read out by measuring physical signals transmitted via the communication interface and/or **in that** for the web service call (WSA), a web service protocol is used, which contains the service and/or function information in a transport protocol and/or in a message protocol and/or distributed over the two protocol types of the web service protocol.

3. Method according to claim 2, **characterized in that** the web service proxy module (WSPM1; ...; WSPM5) is activated by an apparatus-specific communication interface, as soon as the web service call occurs and **in that** the web service proxy module (WSPM1; ...; WSPM5) reads out and preprocesses the service and/or function information contained in the web service call (WSA), and subsequently starts the corresponding web service (WS1; ...; WS7).

4. Method according to at least one of the preceding claims, **characterized in that**, after the execution of the function call (FA), the web service (WS1; ...; WS7) sends back a result to the web service proxy module (WSPM1; ...; WSPM5), and **in that** the web service proxy module (WSPM1; ...; WSPM5) responds to the web service call (WSA).

5. Method according to claim 1, **characterized in that** the web service call (WSA) is recognized and read out in the recognition module (ERKM7, ERKM8) integrated in the web service (WS7; WS8), and **in that** the read out information is transmitted to a capturing module (ERFM8) integrated in the web service (WS7) or unequivocally associated with the web service (WS7; WS8) and/or **in that** the capturing module (ERFM8) monitors internal web service calls within the respective web service (WS8), and, after the performance of the web service (WS8) it captures the implementing thereof, wherein the web service (WS8) automatically sends a communication with the service and/or function information, which the recognition module (ERKM8) has read out beforehand from the message and/or transport protocol.

6. Method according to claim 1, **characterized in that** during the performance of the web service (WS7, WS8), the service- and/or function-specific data is captured by the capturing module (ERFM7) integrated in the web service (WS7) and/or **in that** the web service (WS7) accesses, within its own instance, the service and/or function information contained in the web service protocol.

7. Method according to at least one of the preceding claims, **characterized in that** the web service (WS7, WS8) calls the capturing module (ERFM7, ERFM8) and uses its response as sole recipient, and it starts the further processing with the actual function call (FA) in the automation component (AK).

8. Method according to claim 1, **characterized in that** the recognition of the web service call(WSA1) occurs indirectly by the recognition of a function call (FA) from the web service (WS9) to the process execution module (PAM), in the automation component (AK), and **in that** the actions performed by the function call (FA) are captured by the capturing module (ERFM9, ERFM10) and **in that** the recognition and capturing occur by means of a web service proxy module (WSPM10) downstream of the web service (WS10).

9. Method according to at least one of the preceding claims, **characterized in that** a communication and/or data access architecture is provided, which provide(s) the service and/or function information or events for the capturing module (ERFM9).

10. Method according to at least one of the preceding claims, **characterized in that** the function calls (FA) and/or data accesses to the process execution module (PAM) are monitored by means of the capturing module (ERFM9, ERFM10) on the hardware side or software side, wherein in particular activities of the automation component or of a special part of the automation component (AK) are monitored, which are called functionally directly or indirectly by the web service.

11. Method according to at least one of the preceding claims, **characterized in that** the function calls (FA) and/or service- and/or function-specific data-capturing module (ERFM10) is called by the web service proxy module (WSPM10), wherein a direct or indirect communication occurs between the web service proxy module (WSPM) and the capturing module (ERFM).

12. Method according to at least one of the preceding claims, **characterized in that** the decision whether relevant web services or function calls corresponding to the configured recognition and/or assessment parameters are present, occurs by definition and use of specific events or key words in the web service or function call, or, in the case of access to data and functions, by software- and/or hardware-side monitoring of the stored data.

13. Method according to at least one of the preceding claims, **characterized in that** the service and/or function information is transmitted via a web service protocol, preferably a transport protocol, a message protocol and/or service and/or function information distributed over the two protocols.

14. Method according to at least one of the preceding claims, **characterized in that** the web service call (WSA) itself is captured as the service and/or function information.

15. Method according to at least one of the preceding claims, **characterized in that** the transmitted service and/or function information is transmitted within the web service (WS1; ...; WS11) in a data model specific for the web service (WS1; ...; WS11).

16. Method according to at least one of the preceding claims, **characterized in that** during the performance of the web service (WS1; ...; WS11), service- and/or function-specific data in the form of duration of use, number of function calls, values within function results, was captured.

17. Method according to claim 1, **characterized in that** the assessment of the services (D) and/or functions (F) provided by the automation component (AK1; ...; AK9) is configured by specification of the assessment parameters, preferably in the form of service level agreements and **in that** the assessment parameters are stored in the automation component (AK1; ...; AK9) or in an external component.

18. Automation component (AK1; ...; AK11), comprising a process execution module (PAM) for the performance of a service (D) and/or function (F),
in the automation component (AK1; ...; AK11) at least one web service (WS1; ...; WS11) is implemented, comprising a web service interface (WSI) for receiving the web service call (WSA) as well as
an interface for transmitting a function call (FA) to the process execution module (PAM) for the performance of the service (D) and/or the function (F), **characterized in that**,
in the automation component (AK1; ...; AK11), an assessment module (BM1; ...; BM14) is implemented, comprising
a configurable storage module (SM), in which component-specific parameters (P, LAG) for recognizing and assessing the web service calls (WSA) are locally storable,
a recognition module (ERKM1; ...; ERKM11) connected to the web service interface or to the web service output, for recognizing service and/or function information contained in the web service call or in the function call (FA), as well as for approving the performance of the web service (WS1; ...; WS11) and/or of the function setup
a capturing module (ERFM1; ...; ERFM11) connected to the process execution module, to the recognition module as well as to the storage element (SM), for capturing service- and/or function-specific data, during the performance of the web service or for assessing the service (D) and/or function (F) provided by the automation component (AK1; ...; AK11), on the basis of the service and/or function information of the locally captured service- and/or function-specific data as well as of the locally configured and stored use parameters.

19. Automation component according to claim 18, **characterized in that** the assessment module (BM1, BM3, BM4, BM5) is designed as at least one web service proxy module (WSPM1; ...; WSPM5) upstream of the web service (WS1) and/or that the automation component (AK1; ...; AK11) is a control device, a measurement device or a SCADA.

20. Automation component according to claim 18 or 19, **characterized in that** a web service proxy module (WSPM2, WSPM31, WSPM32, WSPM51) is associated with each web service (WS2, WS31, WS32, WS51) and/or **in that** a web service proxy module (WSPM41) is associated with several web services (WS41, WS42).

21. Automation component according to claims 18, **characterized in that** the recognition module (ERKM1; ...; ERKM5) is implemented as a software component in a communication stack of the web service proxy module (WSPM1; ...; WSPM5), **in that** the recognition module (ERKM6) is designed as a hardware/software component integrated in a communication interface of the automation component (AK6), by means of which signals transmitted by the communication interface can be measured, **in that** the recognition module (ERKM7, ERKM8) is integrated in the web service (WS7), **in that** the capturing module (ERFM7) is integrated either in the web service (WS7) or unequivocally associated with the web service (WS7) externally as component of the automation component (AK7) and **in that** the capturing module (ERKM9, ERKM10) and the capturing module (ERFM9, ERFM10) are downstream of the web service (WS9) and monitor the function calls (FA) of the web service (WS9).

22. Automation component according to claims 18 to 21, **characterized in that** the recognition module (ERKM10) and the capturing module (ERFM10) are integrated in a web service proxy module (WSPM10) downstream of the web service (WS10).

23. Automation component according to claims 18 to 22, **characterized in that** the assessment module (BM11) is connected as hardware/software component to the process execution module (PAM), wherein function calls (FA) and/or data accesses, which are triggered by the web service (WS11), are monitored.

## Revendications

1. Procédé d'évaluation de l'utilisation d'une prestation (D) et/ou fonction (F) mise à disposition ou appelée par un service web (WS1 ;... ; WS11), comprenant les étapes procédurales suivantes :
détection d'un appel de service web (WSA),
acquisition des informations concernant la prestation (D) et/ou fonction (F) mise à disposition ou appelée par le service web (WS1 ;... ; WS11) et
évaluation de l'utilisation de la prestation (D) et/ou fonction (F) mise à disposition ou appelée sur la base de paramètres et des informations acquises, sachant que le service web (WS1 ;... ; WS11) est implémenté dans une composante d'automatisation (AK1 ;... ; AK11);
**caractérisé en ce**
**que** le service web (WS1 ;... ; WS11) implémenté dans la composante d'automatisation (AK1 ; ... ; AK11) pour l'exécution de la prestation (D) et/ou fonction (F) est appelé localement par un appel de service web (WSA),
**que** l'appel de service web (WSA) ou un appel de fonction (FA) généré par le service web (WS1 ; WS11) est détecté localement au moyen d'un module de détection (ERKM1 ; ... ; ERKM11) implémenté dans la composante d'automatisation (AK1 ;... ; AK11),
**que** les paramètres en tant que paramètres de détection et d'évaluation spécifiques à la composante (P, SLAG) sont enregistrés localement dans un élément de stockage (SM) des composantes d'automatisation (AK1 ; ... ; AK11) pour détecter et acquérir des appels de service web (WSA) sous forme de Service Level Agreements,
**qu'**une information sur la prestation et/ou fonction contenue dans l'appel de service web (WSA) ou l'appel de fonction (FA) concernant la prestation (D) et/ou fonction (F) appelée est lue localement au moyen du module de détection (ERKM1 ; ... ; ERKM11), enregistrée localement dans l'élément de stockage (SM) et comparée aux paramètres de détection enregistrés.
**qu'**en cas de concordance entre l'information sur la prestation et la fonction et un des paramètres de détection, le service web (WS1 ;... ; WS11) est autorisé par le module de détection (ERKM1 ;... ; ERKM711) et exécuté,
**qu'**au cours de l'exécution du service web (WS1 ; ... ; WS11), des données spécifiques à la prestation et/ou à la fonction sont acquises au moyen d'un module d'acquisition (ERFM1 ;... ERFM11) implémenté localement dans la composante d'automatisation et enregistrées dans le module de stockage (SM) et
**que** la prestation (D) et/ou la fonction (F) mise à disposition par la composante d'automatisation (AK1 ;... ; AK11) est évaluée localement sur la base de l'information sur la prestation et/ou fonction, des données acquises spécifiques à la prestation et/ou la fonction et des paramètres d'évaluation définis localement.

2. Procédé selon la revendication 1,
**caractérisé en ce**
**que** l'appel de service web (WSA) est détecté et lu par un module mandataire de service web (WSPM1 ; ... ; WSPM5) placé en amont du service web (WS1 ;... ; WS7) et/ou que l'appel de service web (WSA) est détecté par le module de détection (ERKM6) à base de matériel, intégré à une interface de communication et placé en amont du service web, sachant que l'information sur la prestation et/ou la fonction contenue dans l'appel de service web (WSA) est lue par mesure des signaux physiques transmis par le biais de l'interface de communication et/ou qu'un protocole de service web est utilisé pour l'appel de service web (WSA), lequel protocole contient l'information sur la prestation et/ou la fonction dans un protocole de transport et/ou un protocole de message et/ou divisé entre les deux types de protocoles du protocole de service web.

3. Procédé selon la revendication 2,
**caractérisé en ce**
**que** le module mandataire de service web (WSPM1 ; WSPM25) est activé par une interface de communication spécifique à l'appareil dès que l'appel de service web (WSA) a lieu et/ou que le module mandataire de service web (WSPM1 ; ... ; WSPM5) lit et prépare l'information sur la prestation et/ou la fonction, contenue dans l'appel de service web (WSA), puis démarre le service web correspondant (WS1 ; ... ; WS7).

4. Procédé selon au moins une des revendications précédentes,
**caractérisé en ce**
**que** le service web (WS1 ; ... ; WS7) renvoie, après exécution de l'appel de la fonction (FA), un résultat au module mandataire de service web (WSPM1 ; ... ; WSPM5) et que le module mandataire de service web (WSPM1 ; WSPM25) répond à l'appel de service web (WSA).

5. Procédé selon la revendication 1,
**caractérisé en ce**
**que** l'appel du service web (WSA) est détecté et lu par le module de détection (ERKM7, ERKM8) intégré au service web (WS7 ; WS8), que les informations lues sont transmises au module d'acquisition (ERFM8) intégré au service web (WS7) ou attribué de manière unique au service web (WS7 ; WS8) et/ou que le module d'acquisition (ERFM8) surveille les appels de service web internes à l'intérieur du service web correspondant (WS8) et acquiert, après exécution du service web (WS8), son traitement, sachant que le service web (WS8) envoie automatiquement une notification avec les informations sur la prestation et/ou la fonction que le module de détection (ERKM8) a lues précédemment à partir du protocole de message et/ou de transport.

6. Procédé selon la revendication 1,
**caractérisé en ce**
**que** les données spécifiques à la prestation et/ou fonction créées lors de l'exécution du service web (WS7, WS8) sont acquises par le module d'acquisition (ERJFM7) intégré au service web (WS7) et/ou que le service web (WS7) accède à l'intérieur de sa propre instance aux informations sur la prestation et/ou la fonction, contenues dans le protocole de service web.

7. Procédé selon au moins une des revendications précédentes,
**caractérisé en ce**
**que** le service web (WS7, WS8) appelle le module d'acquisition (ERFM7, ERFM8) et utilise sa réponse comme seul destinataire et démarre le traitement avec l'appel de la fonction (FA) effectif dans la composante d'automatisation (AK).

8. Procédé selon la revendication 1,
**caractérisé en ce**
**que** la détection de l'appel de service web (WSA1) a lieu indirectement par détection d'un appel de fonction (FA) provenant du service web (WS9) adressé au module d'exécution de processus (PAM) dans la composante d'automatisation (AK) et que les actions exécutées par l'appel de fonction (FA) sont acquises par le module d'acquisition (ERFM9, ERFM10), sachant que la détection et l'acquisition ont lieu de préférence au moyen d'un module mandataire de service web (WSPM10) placé en aval du service web (WS10).

9. Procédé selon au moins une des revendications précédentes,
**caractérisé en ce**
**qu'**est fournie une architecture de communication et/ou d'accès aux données qui met les informations sur la prestation et/ou la fonction ou les événements à la disposition du module d'acquisition (ERFM9).

10. Procédé selon au moins une des revendications précédentes,
**caractérisé en ce**
**que** les appels de fonction (FA) et/ou accès aux données sur le module d'exécution de processus (PAM) sont surveillés côté matériel ou logiciel au moyen du module d'acquisition (ERFM9, ERFM10), sachant que sont notamment surveillées les activités de la composante d'automatisation ou d'une partie spéciale de la composante d'automatisation (AK) qui sont appelées directement ou indirectement de manière fonctionnelle par le service web.

11. Procédé selon au moins une des revendications précédentes,
**caractérisé en ce**
**que** le module d'acquisition (ERFM10) acquérant les appels de fonction (FA) et/ou les données spécifiques à la prestation et/ou la fonction est appelé par le module mandataire de service web (WSPM10), sachant qu'a lieu une communication directe ou indirecte entre le module mandataire de service web (WSPM) et le module d'acquisition (ERFM).

12. Procédé selon au moins une des revendications précédentes,
**caractérisé en ce**
**que** la décision de savoir si des services web ou des appels de fonction pertinents, correspondant aux paramètres de détection et/ou d'évaluation configurés est prise par définition et utilisation des événements spécifiques ou mots-clés dans le service web ou l'appel de fonction ou lors de l'accès aux données et fonctions au moyen de la surveillance côté logiciel et/ou matériel des données enregistrées.

13. Procédé selon au moins une des revendications précédentes,
**caractérisé en ce**
**que** l'information sur la prestation et/ou fonction est transmise par un protocole de service web, de préférence un protocole de transport, protocole de message et/ou une information sur la prestation et/ou la fonction divisée entre les deux protocoles.

14. Procédé selon au moins une des revendications précédentes,
**caractérisé en ce**
**que** l'appel de service web (WSA) est acquis lui-même comme information sur la prestation et/ou fonction.

15. Procédé selon au moins une des revendications précédentes,
**caractérisé en ce**
**que** l'information sur la prestation et/ou fonction transmise est transmise à l'intérieur du service web (WS1 ; ... ; WS11) dans un modèle de données spécifique au service web (WS1 ; ...; WS11).

16. Procédé selon au moins une des revendications précédentes,
**caractérisé en ce**
**qu'**au cours de l'exécution du service web (WS1 ; ... ; WS11), des données spécifiques à la prestation et/ou la fonction ont été acquises sous forme de durée d'utilisation, nombre d'appels de fonction, valeurs au sein du résultat de fonction.

17. Procédé selon la revendication 1,
**caractérisé en ce**
**que** l'évaluation des prestations (D) et/ou fonctions (F) mises à disposition par la composante d'automatisation (AK1 ; ... ; AK9) est configurée par spécification des paramètres d'évaluation, de préférence sous forme de Service Level Agreements, sachant que les paramètres d'évaluation sont enregistrés de préférence dans la composante d'automatisation (AK1 ; ... ; AK9) ou dans une composante externe.

18. Composante d'automatisation (AK1 ; ... ; AK11), comprenant un module d'exécution de processus (PAM) pour l'exécution d'une prestation (D) et/ou fonction (F),
sachant qu'au moins un service web (WS1 ; ... ; WS11) est implémenté dans la composante d'automatisation (AK1 ; ... ; AK11), comprenant une interface de service web (WSI) pour recevoir un appel de service web (WSA) ainsi qu'une interface pour transmettre un appel de fonction (FA) au module d'exécution de processus (PAM) pour l'exécution de la prestation (D) et/ou de la fonction (F).
**caractérisée en ce**
**qu'**un module d'évaluation (BM1 ; BM14) est implémenté dans la composante d'automatisation (AK1 ;... ; AK11), comprenant
un module de stockage configurable (SM) dans lequel des paramètres spécifiques à la composante (P, LAG) sont enregistrables localement sous forme de paramètres de détection et d'évaluation pour détecter et évaluer les appels de service web (WSA),
un module de détection (ERKM1 ; ... ; ERKM711) connecté à l'interface de service web et destiné à détecter une information sur la prestation et/ou la fonction, contenue dans l'appel de service web ou l'appel de fonction (FA) ainsi qu'à autoriser l'exécution du service web (WS1 ; ... ; WS11) et/ou de l'appel de fonction sur la base d'une comparaison de l'information sur la prestation et/ou la fonction aux paramètres de détection,
un module d'acquisition (ERFM1 ; ... ; ERFM11) couplé au module d'exécution de processus, au module de détection et à l'élément de stockage (SM) et destiné à détecter les données spécifiques à la prestation et/ou la fonction pendant l'exécution du service web et à évaluer la prestation (D) et/ou la fonction (F) mise à disposition par la composante d'automatisation (AK1 ; ... ; AK11) sur la base de l'information sur la prestation et/ou la fonction, des données spécifiques à la prestation et/ou la fonction acquises localement ainsi que des paramètres d'évaluation configurés et enregistrés localement.

19. Composante d'automatisation selon la revendication 18,
**caractérisée en ce**
**que** le module d'évaluation (BM1, BM3, BM4, BM5) est conçu sous forme d'au moins un module mandataire de service web (WSPM1 ; ... ; WSPM5) placé en amont du service web (WS1) et/ou que l'appareil d'automatisation (AK1, ..., AK11) est un appareil de commande, un appareil de mesure ou un système SCADA.

20. Composante d'automatisation selon la revendication 18 ou 19,
**caractérisée en ce**
**qu'**un module mandataire de service web (WSPM2, WSPM31, WSPM32, WSPM51) est attribué à chaque service web (WS2, WS31, WS32, WS51) et/ou qu'un module mandataire de service web (WSPM41) est attribué à plusieurs services web (WS41, WS42).

21. Composante d'automatisation selon la revendication 18,
**caractérisée en ce**
**que** le module de détection (ERKM1 ; ... ; ERKM5) est implémenté sous forme de composante logicielle dans une pile de communication du module mandataire de service web (WSPM1 ; ... ; WSPM5) et/ou que le module de détection (ERKM6) est conçu sous forme de module matériel/logiciel intégré à une interface de communication de la composante d'automatisation (AK6) au moyen duquel module les signaux transmis par le biais de l'interface de communication sont mesurables et/ou que le module de détection (ERKM7, ERKM8) est intégré au service web (WS7) et/ou que le module d'acquisition (ERFM7) est soit intégré au service web (WS7), soit attribué de manière unique au service web (WS7), de manière externe comme partie de la composante d'automatisation (AK7) et/ou que le module de détection (ERKM9, ERKM10) ainsi que le module d'acquisition (ERFM9, ERFM10) sont placés en aval du service web (WS9) et surveillent les appels de fonction (FA) du service web (WS9).

22. Composante d'automatisation selon la revendication 18 à 21,
**caractérisée en ce**
**que** le module de détection (ERKM10) et le module d'acquisition (ERFM10) sont intégrés dans un module mandataire de service web (WSPM10) placé en aval du service web (WS10).

23. Composante d'automatisation selon la revendication 18 à 22,
**caractérisée en ce**
**que** le module d'évaluation (BM11) est couplé comme composante matérielle/logicielle au module d'exécution de processus (PAM), sachant que sont surveillés les appels de fonction (FA) et/ou accès aux données qui sont déclenchés par le service web.
